# EUROPEAN PATENT APPLICATION

(11) **EP 1 543 885 A1**
(43) Date of publication of application: **22.06.2005**
(21) Application number: 03798385.5
(22) Date of filing: 01.09.2003
(51) Int. Cl.: B05B 11/00, G01M 19/00

(54) **APPARATUS AND METHOD FOR INSPECTING SPRAY PUMP**

(30) Priority: 27.09.2002 JP 2002284573
(71) Applicant: Taisei Kako Co., Ltd., Osaka-shi, Osaka 531-0073 (JP)
(72) Inventor: GOTOH, Yoshiyuki, c/o Taisei Kako Co., Ltd., Ibaraki-shi, Osaka 567-0054 (JP); OHNISHI, Kenji, c/o Taisei Kako Co., Ltd., Ibaraki-shi, Osaka 567-0054 (JP)
(74) Representative: Paul, Dieter-Alfred, Dipl.-Ing.
(86) International application number: PCT/JP2003/011174
(87) International publication number: WO 2004/028704

(57) **Abstract**

The present invention provides a novel spray pump inspection apparatus and method, which allow for accurate acceptability check of a spray pump even with an actuator attached to the spray pump, and are superior in inspection capability and operability to the prior art. The inventive spray apparatus is adapted to inspect a spray pump (20) which sprays a liquid from a container, and includes vibration sensors (2, 3) to be positioned adjacent the spray pump (20), and abnormality detection means (6) which detects spraying abnormality of the spray pump (20) on the basis of low frequency signal components of not higher than a predetermined frequency contained in detection signals generated by the vibration sensors (2, 3) when the spray pump (20) is actuated in air.

## Description

### TECHNICAL FIELD

The present invention relates to a spray pump inspection apparatus and method for detecting an initial defect of a spray pump to be used for a pump spray container such as a cosmetic container or a chemical container.

### BACKGROUND ART

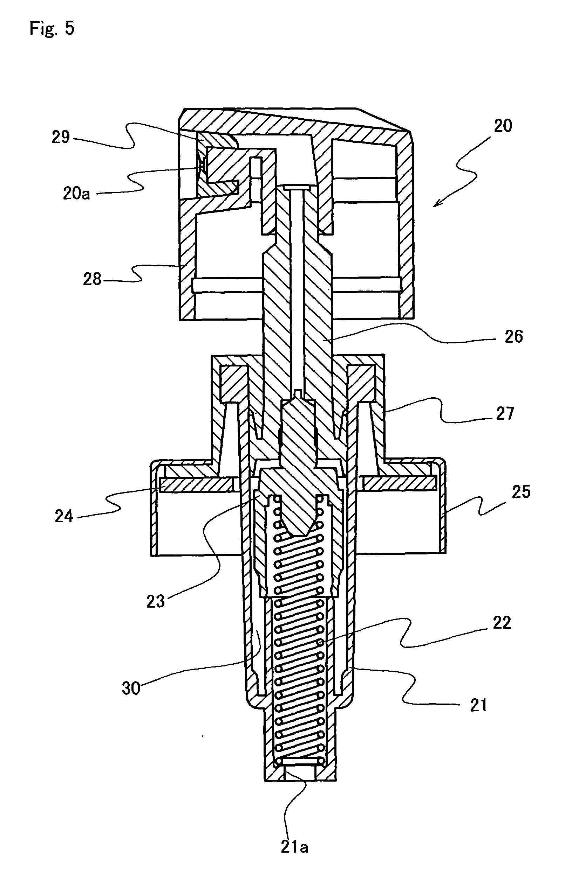

Fig. 5 shows an exemplary prior-art spray pump 20. The spray pump 20 includes a pump housing 21, a spring 22, a clapper valve (closing member) 23, a gasket 24, a perforated ferrule 25, a stem 26, a turret 27, an actuator 28, and an ejection port insert 29. A spray chamber 30 for retaining a content liquid is defined in the housing 21. When the actuator 28 is operated, the internal volume of the spray chamber 30 is reduced to pressurize the content liquid in the spray chamber. Against the biasing force of the spring 22, the pressurized content liquid pushes down the clapper 23 away from the stem 26, whereby a fluid path is formed between the stem 26 and the clapper 23. Thus, the content liquid passes through the inside of the stem 26, and is sprayed from a port of the insert 29. When the operation of the actuator 28 is stopped, the clapper 23, the stem 26 and the actuator 28 are restored to their original positions by the biasing force of the spring 22. At this time, the content liquid in a bottle is sucked through a lower port of the housing 21, and charged into the spray chamber 30.

The spray pump 20 is a kind of accumulator-type spray pump and also a kind of mechanical spray pump, and is particularly called a non-air-back pump. In this type of pump system, outside air is not supplied into the bottle even if the volume of the content liquid in the bottle is reduced by discharging the content liquid. The non-air-back pump is typically used for a pharmaceutical container which contains a drug susceptible to oxygen. Since such a drug is administered to a human body, the pump used for the pharmaceutical container should be inspected more precisely and strictly as compared with pumps used for other purposes. Therefore, it is a conventional practice to perform 100%-inspection on non-air-back pumps.

A conventional spray pump inspection process includes the steps of inspecting a pump body by a leaf proof check and a priming check, and inspecting an actuator to be attached to the stem. In this way, the pump body is inspected with the actuator detached therefrom. This is because only a slight amount of air is sprayed from the ejection port of the actuator, making it difficult to measure a differential pressure with the actuator being attached to the pump body.

In the leaf proof check, pressurized air of 1 × 105 Pa is introduced into the housing 21 through the suction port 21a. Then, the amount of air passing through the housing 21 and discharged from the stem 26 is measured, and it is judged whether or not the air amount meets a standard criterion. If the spray pump is not assembled properly, the air amount does not meet the standard criterion due to air leakage. Thus, a defect is detected.

In the priming check, the stem 26 is pushed down twice for actuation with an orifice thereof being closed. At this time, a suction force (negative pressure) occurs in the suction port 21a at the bottom of the housing 21. The negative pressure is measured by a negative pressure sensor, and it is judged whether or not the negative pressure meets a standard criterion.

In the inspection of the actuator, pressurized air is introduced through the orifice. In this state, a difference between the pressure of the air flowing out through the ejection port and the atmospheric pressure is measured, and it is judged whether or not the measured pressure difference meets a standard criterion.

It is noted that, for industrial products other than the spray pumps, inspection apparatuses which utilize a sound analysis or a vibration analysis have been developed as disclosed in the following patent documents 1, 2 and 3. Patent document 1: Japanese Unexamined Patent Publication No. 8-29211 (1996) Patent document 2: Japanese Unexamined Patent Publication No. 2000-180308 Patent document 3: Japanese Unexamined Patent Publication No. 2001-108518

### DISCLOSURE OF THE INVENTION

Since the conventional spray pump inspection method requires two different checking steps, there has been a demand for a novel inspection method which allows for more speedy and accurate detection of a defective product. In the conventional inspection method, the measurement results significantly vary depending upon the accuracy of product assembly and the conditions of an inspection apparatus, so that wider ranges of standard criteria should be used for acceptability check. It is, therefore, an object of the present invention to provide a novel spray pump inspection apparatus and method, which allow for accurate acceptability check of the spray pump even with an actuator attached to the spray pump, and are superior in inspection capability and operability to the prior art.

In view of the foregoing, the inventors of the present invention collected various measurement data including pressure data, flow rate data and sound data (vibration data) of non-defective products, defective products having users' complaints and defective products prepared intentionally, and analyzed the collected data. Then, the inventors focused particularly on sound generated during actuation of a spray pump. Specifically, the inventors found that sound generated when a spray pump is manually actuated near an operator's ear slightly differs between the non-defective products and the defective products. For automatic inspection of the spray pump by an inspection apparatus, a definite threshold is necessary. However, the inventors failed to find such a definite threshold in the waveform of the spray sound per se.

The inventors made an attempt to analyze the spray sound through FFT analysis. When a relatively simple apparatus requiring no anechoic room was used, however, it was difficult to find a definite threshold. This is because the level of the spray sound is low, and the levels of operation noises of the apparatus and other ambient noises are considerably high. Specifically, the results of the analysis are adversely influenced by sound generated due to interference between resin members in priming the pump, metallic sound generated by a spring incorporated in a pump body, and noises from an ambient environment.

The inventors of the present invention made an attempt to find a frequency band in which there is a definite difference in sound level between a non-defective spray pump and a defective spray pump. As a result, the inventors found that such a definite difference occurs in a low frequency band in which sound is generally inaudible.

According to the present invention which has been achieved based on the finding described above, there is provided an apparatus for inspecting a spray pump which sprays a liquid out of a container, the apparatus including a vibration sensor to be positioned adjacent the spray pump, and abnormality detection means which detects spraying abnormality of the spray pump on the basis of a low frequency signal component of not higher than a predetermined frequency contained in a detection signal generated by the vibration sensor when the spray pump is actuated in air. The vibration sensor is preferably spaced from the spray pump.

The present invention is applicable to an accumulator-type spray pump and a mechanical spray pump. Particularly, the present invention is advantageously applied to a spray pump including a housing in which a spray chamber is defined for retaining a content liquid. In this type of spray pump, the internal volume of the spray chamber is reduced to pressurize the content liquid retained in the spray chamber when an actuator is operated, and the pressurized content liquid pushes down a closing member away from a stem against the biasing force of a spring provided in the housing to form a fluid path between the stem and the closing member, whereby the content liquid passes through the stem to be sprayed out. When such a spray pump is inspected with the use of the inspection apparatus according to the present invention, the spray pump is actuated in air. That is, the spray pump is inspected by pumping an empty shot without charging the content liquid in the spray chamber. The inventors of the present invention have experimentally confirmed that the acceptability check can be stably performed.

The abnormality detection means may include low frequency extraction means which extracts a low frequency signal component from the detection signal of the vibration sensor through Fourier analysis. The low frequency extraction means and the abnormality detection means can be provided at a relatively low cost, for example, by a computer having analysis software installed therein. FFT analysis is preferably utilized for processing a digital signal obtained through A/D conversion of the detection signal. It is noted that the present invention also covers a case in which all the signal processing is performed by analog signal processing.

The vibration sensor may be a microphone which detects spray sound of sprayed air. The microphone may be properly selected, and either a dynamic microphone or a capacitor microphone may be used. Examples of the dynamic microphone include a ribbon microphone and a moving-coil microphone. Examples of the capacitor microphone include a DC bias capacitor microphone, an electret capacitor microphone and a high-frequency capacitor microphone. The electret capacitor microphone herein includes a diaphragm electret type and a back electret type. If the type of the microphone is changed, the threshold frequency supposedly varies due to differences in frequency characteristics of the microphone. Therefore, a proper threshold should be experimentally determined in advance. Further, it is preferred to use a microphone having a frequency band which covers the low frequency band not higher than the predetermined frequency.

The vibration sensor may detect air sprayed from an ejection port of the spray pump when the spray pump is actuated. In this case, the vibration sensor can detect low frequency sound generated by the sprayed air as well as a pressure change on a sensor surface and an air friction sound caused by the air sprayed on the sensor.

The vibration sensor may be positioned adjacent a suction port of the spray pump. In this case, the sensor can detect the low frequency sound leaking through the suction port during the spraying as well as a pressure change occurring in the vicinity of the suction port during the actuation. Whether the vibration sensor is positioned adjacent the ejection port or adjacent the suction port is determined depending upon the structure of the spray pump. Vibration sensors may be respectively positioned adjacent the ejection port and adjacent the suction port, and an exceptional condition for the acceptability check may be set based on correlation between detection signals of these two sensors.

The abnormality detection means may include storage means which stores reference data. In this case, the spraying abnormality of the spray pump may be detected by comparison between the low frequency signal component and the reference data. The storage means may be provided, for example, as a memory or an external storage device. The comparison may be performed, for example, by a computer or an ASIC.

The predetermined frequency is preferably not higher than 100 Hz, more preferably not higher than 50 Hz. The extraction of only the low frequency signal component having a frequency of not higher than 100 Hz or 50Hz from the spray sound allows for accurate and speedy product acceptability check. The extraction of the signal component in the predetermined frequency band is achieved more reliably by passing the sensor signal through a predetermined filter such as a low pass filter or a high pass filter.

The present invention further provides a method for inspecting a spray pump which sprays a liquid out of a container. The method includes the steps of positioning a vibration sensor in the vicinity of the spray pump, and detecting spraying abnormality of the spray pump on the basis of a low frequency signal component of not higher than a predetermined frequency contained in a detection signal generated by the vibration sensor when the spray pump is actuated in air.

The low frequency signal component may be extracted from the detection signal of the vibration sensor through Fourier analysis. The vibration sensor may be a microphone which detects spray sound of sprayed air. The vibration sensor may detect air sprayed from an ejection port of the spray pump when the spray pump is actuated. The vibration sensor may be positioned adjacent a suction port of the spray pump.

In the aforementioned inspection method, the detection of the spraying abnormality of the spray pump is preferably achieved by comparing the low frequency signal component with predetermined reference data.

### BRIEF DESCRIPTION OF THE DRAWINGS

Fig. 1 is a diagram illustrating the overall construction of an inspection apparatus according to an embodiment of the present invention;
Fig. 2 is a time-axis based waveform diagram illustrating the waveform of spray sound observed during actuation of a non-defective product;
Fig. 3 is a time-axis based waveform diagram illustrating the waveform of spray sound observed during actuation of a defective product;
Fig. 4 is a spectrum waveform diagram of spray sound of each sample observed in a low frequency band; and
Fig. 5 is a vertical sectional view of an exemplary spray pump.

### BEST MODE FOR IMPLEMENTING THE INVENTION

An embodiment of the present invention will hereinafter be described.

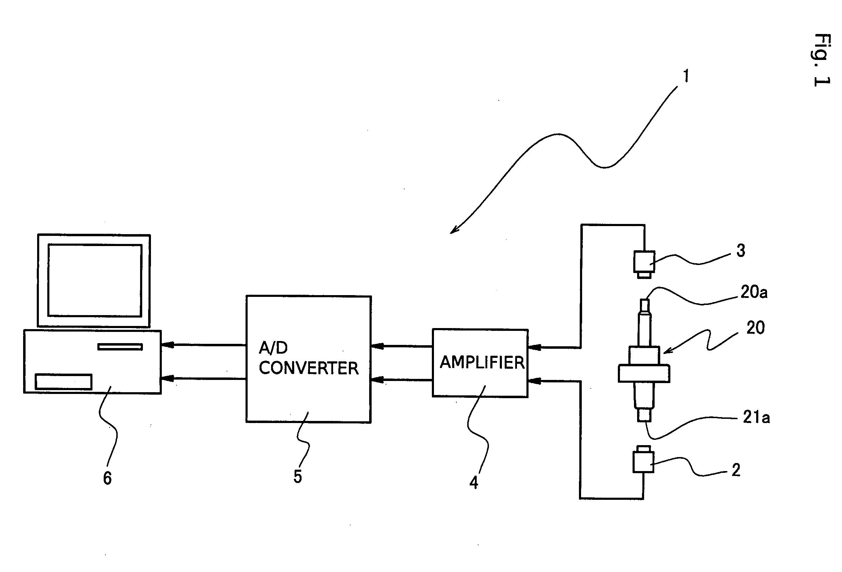

Fig. 1 is a diagram illustrating the overall construction of a spray pump inspection apparatus 1 according to the embodiment of the present invention. The inspection apparatus 1 includes a first small vibration sensor 2 to be positioned adjacent a suction port 21a of a spray pump 20 in opposed spaced relation to the suction port, a second small vibration sensor 3 to be disposed adjacent an ejection port 20a of the spray pump 20 in opposed spaced relation to the ejection port, an amplifier 4 which amplifies detection signals generated by the sensors 2, 3, an A/D converter 5 which performs analog-digital conversion of the detection signals amplified by the amplifier 4, and a personal computer 6 (abnormality detection means) which receives digital signals obtained through the conversion by the converter 5 and analyzes the digital signals. Though not illustrated, the inspection apparatus 1 may further include a hydraulic cylinder which actuates the spray pump 20, and a conveyor which successively transports a plurality of spray pumps 20 to the cylinder.

The spray pumps 20 set one after another in the inspection apparatus 1 are each actuated in air (i.e., in the absence of a liquid to be sprayed). The detection signals generated by the sensors 2, 3 during the actuation are input to the computer 6 via the amplifier 4 and the A/D converter 5. For measurement of spray sound, an actuator 28 may be preliminarily attached to the spray pump or, alternatively, detached from the spray pump as in the conventional method.

Electret capacitor microphones are used as the sensors 2, 3. In an exemplary case, the microphones each have a frequency characteristic of DC to 20 kHz. The vibration sensor 2, which is positioned adjacent the suction port 21a of the spray pump 20, samples sound leaking from the inside of the pump through the suction port 21a. The vibration sensor 3 detects spray sound generated by air sprayed through a fluid path in a stem of the spray pump 20 during the actuation of the spray pump 20. The vibration sensor 3 may be adapted to directly detect the wind pressure of the sprayed air and convert the pressure into an electric signal.

In an exemplary case, the amplifier 4 has a frequency characteristic of DC to 100 kHz. Since low frequency signal components are finally extracted in the present invention, a low speed A/D converter may be used as the A/D converter 5.

The computer 6 includes a CPU, a memory, an external storage device such as a hard disk, an I/O interface, an input board connected to the A/D converter 5, and the like. Further, analysis software for analyzing the digital signals input from the A/D converter 5 is installed in the computer. The analysis software causes the storage means (the external storage device or the memory) to store the digital signals obtained through the conversion of the detection signals of the sensors 2, 3. Further, measurement data may be accumulated to create a database for reproducibility check and data analysis.

The storage means further stores reference data (threshold) which serves as the basis of acceptability check. The reference data may be prepared in a proper manner. For example, frequency waveform data of spray sound is obtained by performing measurement on a plurality of defective samples (e.g., 5 to 20 defective samples), and averaged for the preparation of the reference data.

For removal of DC components from the waveforms of the detection signals, the detection signals are applied to a low pass filter constituted by an analog circuit and software. Thus, frequency components of an inaudible frequency range of about 3 Hz to about 100 Hz are extracted.

For accurate acceptability check, the analysis software includes a low frequency extraction program (low frequency extraction means) which extracts low frequency signal components of not higher than 100 Hz, preferably not higher than 50. Hz, through FFT analysis of the signals of the spray sound detected by the sensors 2, 3.

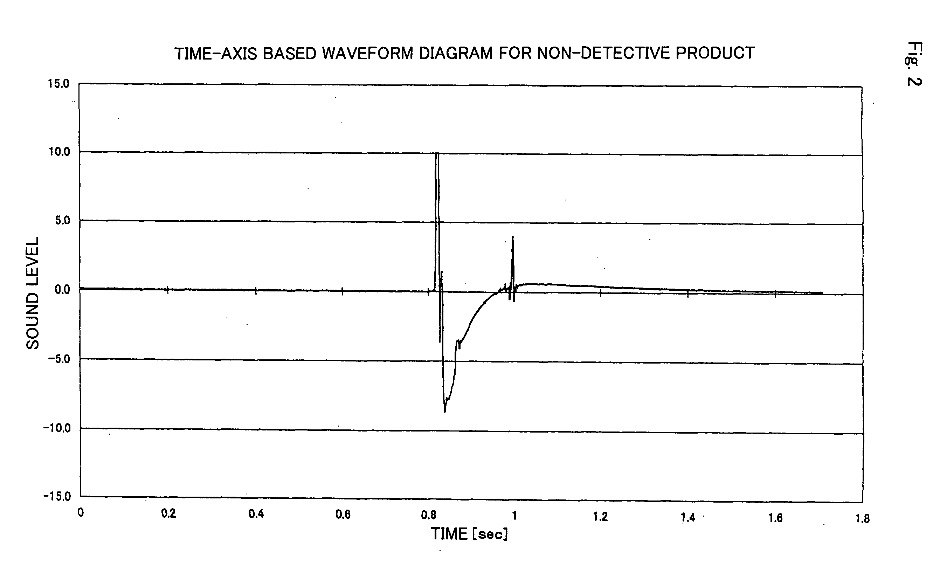

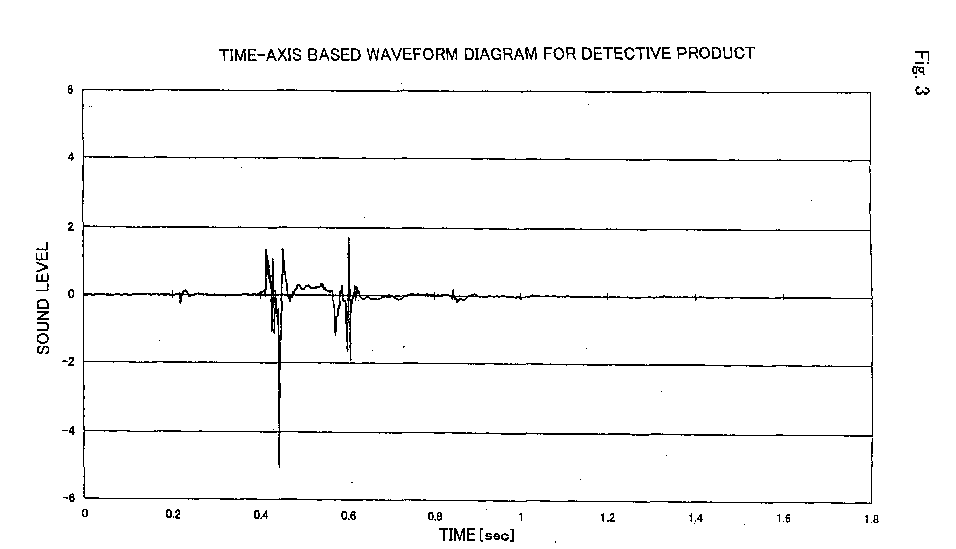

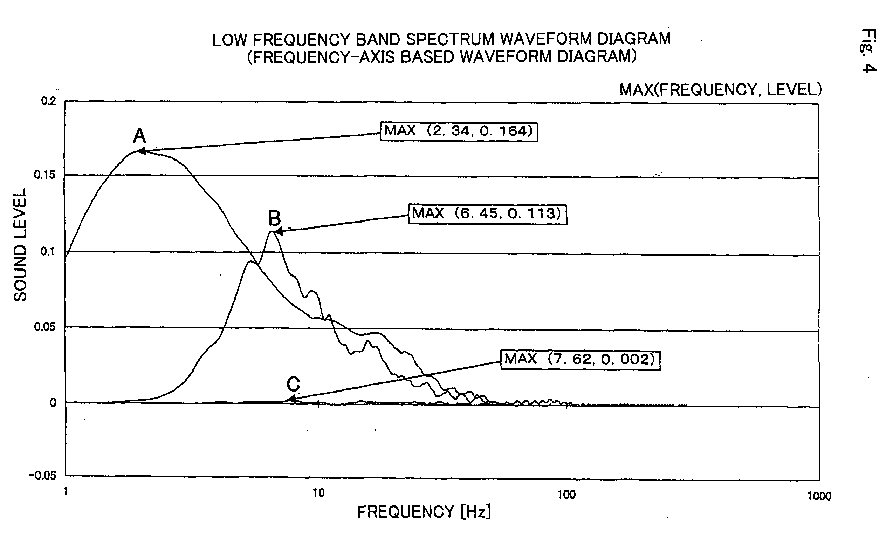

Fig. 2 shows the result of the measurement performed on a non-defective pump and, specifically, an example of the signal of the spray sound detected by the sensor 3 positioned adjacent the ejection port. Similarly, Fig. 3 shows the result of the measurement performed on a defective pump. Waveforms of the spray sound observed over time are converted into digital signals, which are in turn input into the computer 6 and analyzed through the FFT analysis by the analysis software. Thus, only the low frequency components of not higher than 100 Hz are extracted. Fig. 4 is a spectrum waveform diagram illustrating the extracted low frequency components. In Fig. 4, the waveform A is a spectrum waveform for the non-defective spray pump 20, and the waveform B is a spectrum waveform for a non-defective spray pump having a filter incorporated therein. Further, the waveform C is a spectrum waveform for a defective spray pump. As apparent from Fig. 4, the waveforms for the non-defective spray pumps each have a high peak level, whereas the peak level of the waveform for the defective spray pump is substantially zero. Thus, the abnormality check of the spray pump can be accurately performed.

A discriminant for the abnormality check is not particularly limited, but may be based on the integration value of each spectrum waveform or the peak level of each spectrum waveform, or based on any other methods.

The present invention makes it possible to inspect, without contamination, a pump of a structure which cannot be inspected by the conventional inspection method utilizing a pressure sensor or the like. Even in the case of a pump which can be inspected by the conventional method, the acceptability check based on the detection of the spraying abnormality can be achieved irrespective of the accuracy of product assembly and the conditions of the inspection apparatus. Particularly, the acceptability check is based on the low frequency component of the spray sound of the pump. Therefore, the acceptability check can be accurately and stably performed in spite of various noise sources which may otherwise influence the measurement in the audible frequency range.

## Claims

1. A spray pump inspection apparatus for inspecting a spray pump which sprays a liquid out of a container, the spray pump inspection apparatus comprising:
a vibration sensor to be positioned adjacent the spray pump; and
abnormality detection means which detects spraying abnormality of the spray pump on the basis of a low frequency signal component of not higher than a predetermined frequency contained in a detection signal generated by the vibration sensor when the spray pump is actuated in air.

2. A spray pump inspection apparatus as set forth in claim 1, wherein the abnormality detection means includes low frequency extraction means which extracts the low frequency signal component from the detection signal of the vibration sensor through Fourier analysis.

3. A spray pump inspection apparatus as set forth in claim 1, wherein the vibration sensor is a microphone which detects spray sound of sprayed air.

4. A spray pump inspection apparatus as set forth in claim 1, wherein the vibration sensor detects air sprayed from an ejection port of the spray pump when the spray pump is actuated.

5. A spray pump inspection apparatus as set forth in claim 1, wherein the vibration sensor is positioned adjacent a suction port of the spray pump.

6. A spray pump inspection apparatus as set forth in claim 1, wherein the abnormality detection means includes storage means which stores reference data, and detects the spraying abnormality of the spray pump by comparison between the low frequency signal component and the reference data.

7. A spray pump inspection apparatus as set forth in claim 1, wherein the predetermined frequency is not higher than 100 Hz.

8. A spray pump inspection apparatus as set forth in claim 1, wherein the predetermined frequency is not higher than 50 Hz.

9. A spray pump inspection method for inspecting a spray pump which sprays a liquid out of a container, the spray pump inspection method comprising the steps of:
positioning a vibration sensor in the vicinity of the spray pump; and
detecting spraying abnormality of the spray pump on the basis of a low frequency signal component of not higher than a predetermined frequency contained in a detection signal generated by the vibration sensor when the spray pump is actuated in air.

10. A spray pump inspection method as set forth in claim 9, wherein the low frequency signal component is extracted from the detection signal of the vibration sensor through Fourier analysis.

11. A spray pump inspection method as set forth in claim 9, wherein the vibration sensor is a microphone which detects spray sound of sprayed air.

12. A spray pump inspection method as set forth in claim 9, wherein the vibration sensor detects air sprayed from an ejection port of the spray pump when the spray pump is actuated.

13. A spray pump inspection method as set forth in claim 9, wherein the vibration sensor is positioned adjacent a suction port of the spray pump.

14. A spray pump inspection method as set forth in claim 9, wherein the spraying abnormality of the spray pump is detected by comparing the low frequency signal component with predetermined reference data.

15. A spray pump inspection method as set forth in claim 9, wherein the predetermined frequency is not higher than 100 Hz.

16. A spray pump inspection method as set forth in claim 9, wherein the predetermined frequency is not higher than 50 Hz.
